(19) Europäisches Patentamt
European Patent Office
Office européen des brevets

(11) EP 3 121 215 A1

(12) EUROPEAN PATENT APPLICATION
published in accordance with Art. 153(4) EPC

(43) Date of publication:
**25.01.2017 Bulletin 2017/04**

(21) Application number: **15764956.7**

(22) Date of filing: **11.03.2015**

(51) Int Cl.:
***C08G 75/02*** *(2016.01)*
***C08G 59/40*** *(2006.01)*
***C08G 81/00*** *(2006.01)*
***C08J 9/26*** *(2006.01)*

(86) International application number:
**PCT/JP2015/057173**

(87) International publication number:
**WO 2015/141540 (24.09.2015 Gazette 2015/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **18.03.2014 JP 2014054553**
**28.03.2014 JP 2014067701**

(71) Applicant: **Toray Industries, Inc.**
**Tokyo 103-8666 (JP)**

(72) Inventors:
- **TAKEUCHI, Kosaku**
**Otsu-shi**
**Shiga 520-8558 (JP)**
- **MIHARA, Takaaki**
**Otsu-shi**
**Shiga 520-8558 (JP)**
- **HORIGUCHI, Tomoyuki**
**Otsu-shi**
**Shiga 520-8558 (JP)**

(74) Representative: **Webster, Jeremy Mark**
**Mewburn Ellis LLP**
**City Tower**
**40 Basinghall Street**
**London EC2V 5DE (GB)**

(54) **POLYPHENYLENE SULFIDE POROUS BODY AND PRODUCTION METHOD THEREOF, POLYPHENYLENE SULFIDE-THERMOPLASTIC RESIN BLOCK COPOLYMER AND PRODUCTION METHOD THEREOF**

(57) A polyphenylene sulfide porous body has, on its surface, porous areas having porous structures, and non-porous areas having substantially no porous structures.

Provided is a novel polyphenylene sulfide porous body that has heat resistance and chemical resistance and overcomes the trade-off between mechanical characteristics and permeation performance.

[Figure 1]

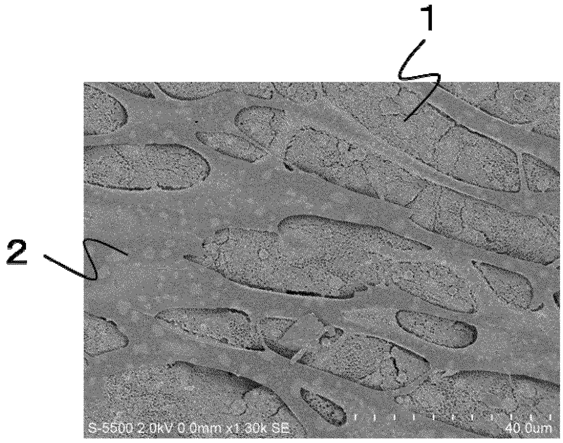




Printed by Jouve, 75001 PARIS (FR)

## Description

Technical Field

The present invention relates to polyphenylene sulfide porous bodies and methods for producing the same, and polyphenylene sulfide-thermoplastic resin block copolymers and methods for producing the same, and particularly to a polyphenylene sulfide porous body having high heat resistance and chemical resistance as well as a good balance of mechanical characteristics and permeation performance.

Background Art

Porous bodies have been used, for example, for separation membranes, battery separators, low dielectric constant materials, adsorbents, catalyst supports, and filters. Of these, separation membranes have been used in a wide variety of fields such as the production of processing water in the electronics industry, the chemical industry, and the machine industry; the production of drinking water by desalination; separation and concentration of useful substances in the production of pharmaceuticals, foods, and cosmetics; and medical applications such as artificial kidneys and plasma separation membranes. Separation membranes have recently been used also in the environmental energy field, for example, for recovering carbonic acid gas generated from fossil fuel. Furthermore, the membrane separation process, which does not involve phase transition, e.g., from liquid to gas, has been receiving attention as a separation process that requires less energy as compared with other processes such as distillation, and there is an increasing demand for separation membranes with high heat resistance and chemical resistance that can withstand harsh environments, for example, under high temperature and pressure.

Known materials of conventional separation membranes include organic polymeric membranes and inorganic membranes, and examples of the material of organic polymeric membranes include cellulose acetate, polysulfone, polyethersulfone, polyacrylonitrile, polypropylene, polyamide, and polyvinylidene fluoride. Conventional organic polymeric membranes, although having an advantage in that they can be produced with higher productivity than inorganic membranes, have sometimes been used in limited applications because there have been few materials that have heat resistance and chemical resistance and are also produced at low cost.

Prior Art Documents

Patent Documents

Examples of the material of inorganic membranes include zeolite, ceramic, glass, and metal (e.g., Non-Patent Document 1).

There have been proposed porous membranes having high heat resistance and chemical resistance made of polyphenylene sulfide (hereinafter also referred to as PPS for short). For example, methods are known in which at least one polymer other than PPS is dissolved with a solvent and removed from a polymer alloy containing PPS to give a PPS porous body (e.g., Patent Documents 1 and 2).

Furthermore, methods are disclosed in which *N*-methylpyrrolidone, diethylene glycol, or benzophenone are used as a solvent for PPS, and PPS are made porous by kneading and extruding (e.g., Patent Documents 3 and 4). According to these methods, since the dense layer at the inside wall of a hollow fiber membrane acts as a separation layer, and the sponge-like structure adjacent to the dense layer acts as a support layer, high separation performance and mechanical characteristics are provided.

Other methods for producing a PPS porous body are disclosed in which PPS is drawn to form a microporous material (e.g., Patent Documents 5 and 6).

Furthermore, block copolymers made of polyester and a PPS oligomer having carboxyl groups at ends of the PPS chain are also known (e.g., Patent Document 7).


Patent Document 1: JP 2010-254943 A
Patent Document 2: JP 2012-233018 A
Patent Document 3: JP 60-248202 A
Patent Document 4: JP 2014-189747 A
Patent Document 5: JP 58-67733 A
Patent Document 6: JP 59-59917 A
Patent Document 7: JP 04-311725 A

Non-Patent Document

Non-Patent Document 1: Expected materials for the future Vol. 10. No. 7, p. 18

## Summary of the Invention

### Problems to be Solved by the Invention

The inorganic membrane described in Non-Patent Document 1, although having relatively high heat resistance and chemical resistance, has disadvantages of a small membrane area per unit volume due to the difficulty in processing the membrane into hollow fibers, high cost, and unstable membrane performance.

The methods of Patent Documents 1 and 2 provide separation membranes having uniform micropores and thus having high separation performance, but unfortunately, the porous membranes have low mechanical characteristics because they have no support part for retaining the membrane strength.

The methods of Patent Documents 3 and 4 provide high separation performance and mechanical characteristics, but unfortunately, the fluid permeation performance was low because the inner surface is covered with the dense layer. Furthermore, these methods have disadvantages in that solvents for dissolving PPS are very limited, and the PPS can be dissolved only in a pressurized state and under harsh conditions such as high temperatures of 200°C or higher, leading to great difficulty in membrane forming and high cost.

In PPS porous bodies produced by the drawing methods of Patent Documents 5 and 6, pores are formed throughout the bodies. Thus, if the pore size is increased in order to improve permeation performance, mechanical characteristics of the membrane rapidly decrease. That is, there is a trade-off problem, and permeation performance and mechanical characteristics cannot be simultaneously achieved. Furthermore, there is another drawback in that the shape of compacts made of the porous bodies is limited to those applicable to the drawing process, such as fibers and films.

For the block copolymer produced by the method of Patent Document 7, polyester is combined for the purpose of imparting flexibility to PPS, and removal of polyester from the block copolymer to obtain a porous body is not discussed. Even if polyester is removed from the block copolymer, the resulting porous body has low heat resistance and chemical resistance as well as low mechanical characteristics because the molecular weight of the PPS is low.

As described above, PPS porous bodies that have heat resistance and chemical resistance, inherent in PPS, and also achieve both mechanical characteristics and fluid permeation performance are not known at present. It is an object of the present invention to provide a PPS porous body that has high heat resistance and chemical resistance and simultaneously achieve mechanical characteristics and permeation performance.

### Means for Solving the Problems

To solve the problems described above, the polyphenylene sulfide porous body of the present invention has the following structure:

A polyphenylene sulfide porous body having, on its surface, porous areas having porous structures, and non-porous areas having substantially no porous structures.

The method for producing a polyphenylene sulfide-thermoplastic resin block copolymer according to the present invention has the following structure:

A method for producing a polyphenylene sulfide-thermoplastic resin block copolymer, including reacting a polyphenylene sulfide (A) having a reactive functional group at an end, a thermoplastic resin (B), and a bifunctional linking agent (C).

The polyphenylene sulfide-thermoplastic resin block copolymer of the present invention is a polyphenylene sulfide-thermoplastic resin block copolymer containing polyphenylene sulfide units and thermoplastic resin units linked via a linking group containing a secondary alcohol.

The method for producing a polyphenylene sulfide porous body according to the present invention has the following structure:

A method for producing a polyphenylene sulfide porous body, including decomposing and removing a thermoplastic resin component from the above-described polyphenylene sulfide-thermoplastic resin block copolymer or a polyphenylene sulfide-thermoplastic resin block copolymer obtained by the above-described method.

In the polyphenylene sulfide porous body of the present invention, the porous areas on the surface preferably have an average area ratio of 10% to 80%.

In the polyphenylene sulfide porous body of the present invention, the non-porous areas are preferably communicated on the surface.

The polyphenylene sulfide porous body of the present invention preferably has a porosity of 10% to 80%.

The polyphenylene sulfide porous body of the present invention preferably made of a polyphenylene sulfide

having a number average molecular weight (Mn) of 6,000 to 100,000.

In the method for producing a polyphenylene sulfide-thermoplastic resin block copolymer according to the present invention, the reactive functional group of the polyphenylene sulfide (A) is preferably a group selected from the group consisting of an amino group, a carboxyl group, a hydroxyl group, a mercapto group, an isocyanato group, a silanol group, an acid anhydride group, an epoxy group, and derivatives thereof.

In the method for producing a polyphenylene sulfide-thermoplastic resin block copolymer according to the present invention, the bifunctional linking agent (C) is preferably an epoxy resin.

In the method for producing a polyphenylene sulfide-thermoplastic resin block copolymer according to the present invention, the epoxy resin preferably contains a halogen atom.

In the method for producing a polyphenylene sulfide-thermoplastic resin block copolymer according to the present invention, the epoxy resin preferably has a number average molecular weight of 300 or more.

In the method for producing a polyphenylene sulfide-thermoplastic resin block copolymer according to the present invention, the epoxy resin preferably has an epoxy equivalent of at least 200 g/ep.

In the polyphenylene sulfide-thermoplastic resin block copolymer of the present invention, the polyphenylene sulfide units and the linking group are preferably linked via a structure selected from the group consisting of secondary amine, ester, ether, sulfide, amide, and siloxane.

In the polyphenylene sulfide-thermoplastic resin block copolymer of the present invention, the linking group preferably contains a halogen atom.

In the polyphenylene sulfide-thermoplastic resin block copolymer of the present invention, the polyphenylene sulfide units preferably have a number average molecular weight (Mn) in a range of 6,000 to 100,000.

The polyphenylene sulfide-thermoplastic resin block copolymer of the present invention preferably has a number average molecular weight (Mn) in a range of 10,000 to 2,000,000.

## Effects of the Invention

The present invention provides a polyphenylene sulfide porous body that has high heat resistance and chemical resistance and also achieves both mechanical characteristics and fluid permeation performance.

## Brief Description of the Drawing

FIG. 1 is a micrograph of the surface of a PPS porous body of the present invention produced in Example 1, observed under a scanning electron microscope at a magnification of 1,300X.

## Mode for Carrying Out the Invention

The present invention will now be described in detail.

### (1) PPS Porous Body

The PPS porous body in the present invention has, on its surface, porous areas having porous structures and non-porous areas having substantially no porous structures.

As used herein, the term "porous area" refers to an area in a scanning electron microscope (SEM) image of the surface of a porous body, where porous structures in which at least three pores adjacent to each other having an interpore distance of not more than 5 times the pore size are gathered are circumscribed, specifically, an area where numbers of pores are present, as indicated by 1 in FIG. 1. The term "interpore distance" refers to a nearest distance between the perimeter of a pore and the perimeter of an adjacent pore. The term "pore" refers to an opening having a diameter of at least 10 nm and a depth equal to or larger than the diameter. The term "non-porous area having substantially no porous structures" refers to an area other than the porous areas as indicated by 2 in FIG. 1, that is, an area where the distance between pores is five times or more the pore size.

Each porous area functions as a channel when fluids such as gas and liquid are filled or made to permeate from the outside to the inside or from the inside to the outside of the PPS porous body. Each non-porous area functions as a support part for improving mechanical strengths such as tensile strength, compression strength, and bending strength of the PPS porous body. Thus, the PPS porous body having porous areas and non-porous areas on its surface can achieve both mechanical strength and fluid permeation performance.

In the present invention, the porous areas preferably have an average area ratio of 10% to 80%, by which both mechanical characteristics and fluid permeation performance can be achieved. The average area ratio of the porous areas is more preferably 20% or more, still more preferably 30% or more. The average area ratio of the porous areas is more preferably 75% or less, still more preferably 70% or less. As used herein, the term "average area ratio of the

porous areas" is an average value of area ratios of randomly selected ten porous areas in an image of a PPS porous body surface observed under a scanning electron microscope at a magnification of 1,300X, which area ratios are calculated by the following equation where (S) is an area of a porous area, and (S') is an area of the whole surface.

$$\text{Area ratio of porous areas (\%)} = (S)/(S') \times 100$$

It should be noted that a porous body in which pores are present on its surface with the same frequency is distinct from the PPS porous body of the present invention because such a porous body includes a non-porous area alone (the average area ratio of porous areas: 0%) or a porous area alone (the average area ratio of porous areas: 100%).

The reason why porous areas having an area ratio in the above-described range improve mechanical characteristics is presumably as follows: in a porous body in which the average area ratio of porous areas is high, cracks occur at branches of pores when external forces such as tension, compression, and bending are applied, and starting from the cracks, the whole structure is readily broken; by contrast, in a porous body in which the average area ratio of porous areas is low, non-porous areas on the surface function to preserve the structure of the whole PPS porous body, reducing the likelihood that the structure is broken. Thus, when non-porous areas are communicated on the surface, the mechanical strength is advantageously improved. As used herein, the phrase "non-porous areas are communicated on the surface" refers to a sea-island structure in which non-porous areas are sea components and porous areas are island components, as shown in FIG. 1, or a structure in which non-porous areas are unidirectionally communicated like stripes, as observed, for example, under a scanning electron microscope. The tensile strength is preferably at least 50 MPa.

The PPS porous body of the present invention preferably has a porosity of 10% to 80%. As used herein, the term "porosity" refers to a volume fraction of pores relative to the volume of the PPS porous body, and it can be determined by the following equation.

$$\text{Porosity (\%)} = \{(\text{apparent volume - actual volume})/\text{apparent volume}\} \times 100$$

As used herein, the term "apparent volume" refers to a volume of the whole PPS porous body including pores. The term "actual volume" refers to a volume of resin components in the PPS porous body, and it is determined by the following equation.

$$\text{Actual volume} = (\text{weight of PPS porous body})/(\text{specific gravity of PPS})$$

A porosity of the PPS porous body in the above preferred range reduces pressure loss during the permeation of fluids through the porous body to improve permeation performance. In addition, such a porosity increases the adsorption and desorption efficiencies of substances and the packing efficiency in forming a composite with different materials and, on the other hand, prevents the reduction of mechanical strengths such as tensile strength, compression strength, and bending strength. The porosity is more preferably 20% or more, still more preferably 30% or more. The porosity is more preferably 70% or less, still more preferably 65% or less.

Furthermore, in contrast to PPS porous bodies produced by drawing methods, which are oriented in particular directions and, therefore, have anisotropic mechanical characteristics, the PPS porous body of the present invention has an isotropic structure and, therefore, has high isotropic mechanical characteristics.

The average pore size of the PPS porous body of the present invention may be, but not necessarily, in the range of 0.01 to 1 μm. The average pore size is determined as follows: ten randomly selected cross-sections of a PPS porous body are obtained by a Cross-section Polisher method (CP method) and observed under a scanning electron microscope at a magnification of 100,000X, and diameters of pores in the observed images are measured and averaged.

The PPS porous body of the present invention may contain resin components other than PPS and minor components such as additives. The minor components may be simply mixed with PPS or bonded to PPS via chemical bonds. The minor components are preferably components containing halogen atoms because they improve the flame resistance of the PPS porous body. In particular, components containing bromine atoms are more preferred. Halogen atoms contained can be detected, for example, by Energy dispersive X-ray spectrometry (EDX). Furthermore, fibrous fillers are preferably contained as other minor components to further improve the mechanical strength of the PPS porous body.

The number average molecular weight (Mn) of the PPS of the PPS porous body of the present invention, to exhibit heat resistance and chemical resistance, inherent in PPS, and provide a porous body having high mechanical characteristics such as mechanical strength and durability, is preferably 6,000 or more, more preferably 10,000 or more,

and still more preferably 15,000 or more. Although there is no upper limit to the number average molecular weight, it is preferably 100,000 or less in terms of high moldability. The molecular weight of PPS is measured by gel permeation chromatography, a type of size exclusion chromatography, and calculated in terms of polystyrene. It should be noted that the number average molecular weight (Mn), when other components such as linking agents are linked with the PPS porous body, means a number average molecular weight of PPS including the other components.

The PPS porous body may be in any macroscopic form, and fibers, films, sheets, resin moldings, powders, and other various forms can be employed. When used as a separation membrane, for example, the PPS porous body is preferably used in the form of a hollow fiber membrane or a sheet-shaped flat membrane, more preferably in the form of a hollow fiber membrane to increase the membrane area per module.

The PPS porous body of the present invention, which has porous structures on its surface, has high fluid permeation performance as compared with a structure having a surface made of a non-porous area alone. As used herein, the term "permeation performance" refers to the amount of permeation, i.e., a permeation flux per unit area per unit time of a fluid that permeates from one surface through the other surface of a porous body under a certain pressure.

(2) Method for Producing PPS-Thermoplastic Resin Block Copolymer and Method for Producing PPS Porous Body

The PPS-thermoplastic resin block copolymer of the present invention can be produced by reacting a polyphenylene sulfide (A) having a reactive functional group at least at an end, a thermoplastic resin (B), and a bifunctional linking agent (C), and a PPS porous body can be produced by removing the thermoplastic resin (B) component from the block copolymer.

The structure of the PPS (A) is a prepolymer having repeating structural units of phenylene sulfide represented by general formula (I) below and a reactive functional group at an end.

[Chemical Formula 1]

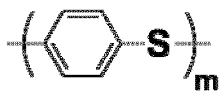

(I)

(In general formula (I), m represents the number of cycles of PPS units phenylene sulfide units.)

The reactive functional group at a PPS end refers to a functional group capable of reacting with a linking agent to form a chemical bond. The reactive functional group at a PPS end is preferably a functional group selected from the group consisting of an amino group, a carboxyl group, a hydroxyl group, a mercapto group, an isocyanato group, a silanol group, an acid anhydride group, an epoxy group, and derivatives thereof. When the PPS has such a reactive functional group as an end structure, the PPS is highly reactive with a linking agent, and the block copolymerization reaction between the PPS and a thermoplastic resin can proceed in a short time and with high efficiency. When the PPS has a reactive functional group only at an end, as compared with when the PPS has pendant reactive functional groups, chemical bond formation with a linking agent occurs at limited locations to suppress cross-linking reaction, as a result of which a PPS-thermoplastic resin block copolymer having thermoplasticity can be produced. Among the reactive functional groups listed above, functional groups selected from an amino group, a carboxyl group, a hydroxyl group, and a mercapto group are particularly preferred.

The functional groups can be introduced into the end of the molecular chain, for example, by adding a sulfide compound (functional group introducing agent) having reactive functional groups during the polymerization of PPS or adding and reacting a sulfide compound (functional group introducing agent) having reactive functional groups after the polymerization of PPS. Specific examples of such sulfide compounds include bis(4-aminophenyl) sulfide, bis(4-carboxyphenyl) sulfide, bis(4-hydroxyphenyl) sulfide, and oligomers thereof. Methods for producing PPS will be described in detail in Section (3).

The number average molecular weight (Mn) of the PPS (A) used for block copolymerization reaction in the present invention is preferably 6,000 to 100,000. When the number average molecular weight is in this range, the PPS in the resulting PPS porous body has an equivalent number average molecular weight, and the PPS porous body has high heat resistance, chemical resistance, and mechanical characteristics.

The thermoplastic resin (B) of the present invention may be any thermoplastic resin that is capable of reacting with the bifunctional linking agent (C) to form a chemical bond and undergoes hydrolysis, pyrolysis, and oxidation decomposition under conditions where PPS does not undergo decomposition, and various thermoplastic resins can be employed. Examples of thermoplastic resins include polyesters, polycarbonates, polyamides, liquid crystal polymers,

polyphenylene ethers, polyimides, polyetherimides, polysulfones, polyethersulfones, polyvinylidene fluorides, polytetrafluoroethylenes, polyethylenes, polypropylenes, polystyrenes, polyvinyl chlorides, polyacrylonitriles, polyvinyl alcohols, polyacetals, polyarylates, elastomers, polymethyl methacrylates, and epoxy resins. In the case of a thermoplastic resin having no reactive functional group reactive with the linking agent, the thermoplastic resin can be used after it is modified, via chemical bonds, with reactive functional groups reactive with the bifunctional linking agent.

Since the block copolymerization reaction is preferably carried out at high temperatures near 280°C to 300°C, at which PPS melts, the thermoplastic resin (B) is preferably a resin having high thermal stability and easy to decompose and remove. For this reason, polyesters, polycarbonates, polyamides, liquid crystal polymers, and polyarylates are preferred, and in terms of cost, polyesters, polycarbonates, and polyamides are more preferred. In particular, aromatic polyesters, which have relatively high heat resistance and can be easily removed by hydrolysis using an aqueous alkaline solution, are still more preferred.

When a polyester is used as the thermoplastic resin (B), any polyester obtained by polymerization of a dicarboxylic acid or alkyl dicarboxylate and a diol and any polyester obtained by polymerization of a lactide may be used. In particular, polyethylene terephthalate or polybutylene terephthalate, obtained using terephthalic acid or dimethyl ester thereof and ethylene glycol or 1,4-butanediol, is preferred because PPS porous bodies can be produced at low cost.

When a polycarbonate is used as the thermoplastic resin (B), any polycarbonate may be used obtained by the phosgene method in which a dihydroxydiaryl compound is reacted with phosgene or the transesterification method in which a dihydroxydiaryl compound is reacted with a carbonate such as diphenyl carbonate. Examples include polycarbonates produced from 2,2-bis(4-hydroxyphenyl)propane (bisphenol A) and phosgene.

When a polyamide is used as the thermoplastic resin (B), any polyamide may be used, such as polylactams obtained by ring-opening polymerization of a cyclic lactam, polyamides obtained by polycondensation of a $\omega$-amino carboxylic acid, polyamides obtained by polycondensation of a diamine and a dicarboxylic acid, and semi-aromatic polyamides. Examples include nylon 6, nylon 11, nylon 12, nylon 66, nylon 610, and nylon 6/612.

The melt viscosities of the PPS and the thermoplastic resin are preferably, but not necessarily, close to each other. In general, as the melt viscosities of a PPS and a thermoplastic resin get closer, that is, as the melt viscosity ratio of the PPS to the thermoplastic resin gets closer to 1, the PPS and the thermoplastic resin, when melt kneaded, tend to be finely dispersed in each other, leading to an improved block copolymerization reaction rate. As used herein, the term "melt viscosity" means a viscosity at a temperature and a shear rate during the reaction.

In the production method of the present invention, the bifunctional linking agent (C) is used as a linking agent for block-copolymerizing the PPS (A) and the thermoplastic resin (B). The linking agent in the present invention refers to a compound or a resin having, in its molecule, two reactive functional groups capable of reacting with the PPS and the thermoplastic resin to form chemical bonds, and specific examples of the reactive functional group in the linking agent include an epoxy group, an oxazoline group, an isocyanato group, a silanol group, an alkoxysilane group, an amino group, a carboxyl group, an acid anhydride group, and carbodiimide. If the linking agent has more than two reactive functional groups in its molecule, the linking agent may react with the PPS and the thermoplastic resin to form crosslinks, and a block copolymer may not be obtained. Therefore, a bifunctional linking agent is necessary for the production of a thermoplastic block copolymer. When the reactive functional groups in the linking agent are epoxy groups, that is, when the linking agent is an epoxy resin, the linking agent is advantageously capable of reacting with various functional groups such as amines, carboxylic acids, alcohols, aromatic alcohols, thiols, isocyanates, silanols, and acid anhydrides to form chemical bonds and allows the reaction to proceed in a short time and with high efficiency. Preferred aspects of an epoxy resin in the case where the epoxy resin is used as the linking agent will be described in detail in Section (4).

The linking agent preferably contains a halogen atom in its molecule. Since halogen atoms have larger atomic weights than a carbon atom, a nitrogen atom, and an oxygen atom, the linking agent containing a halogen atom has a higher molecular weight, which makes it possible to prevent or reduce sublimation and evaporation in producing a PPS-thermoplastic resin block copolymer. Furthermore, the flame resistance of the PPS-thermoplastic resin block copolymer can be improved by utilizing self-extinguishing properties of halogen atoms. The number of halogen atoms in one molecule of the linking agent is not limited, and linking agents containing one or more halogen atoms in their molecules can be used.

The heat resistance of the linking agent means that the linking agent has high heat stability in a nitrogen atmosphere at 300°C and 1 atmospheric pressure. Specifically, the weight retention rate, as measured using a thermogravimetric (TG) analyzer under conditions where the temperature is raised from 30°C to 300°C at 30°C/min and then held at 300°C for 10 minutes under a flow of nitrogen, is 50% by weight or more. The weight retention rate is calculated by the following equation. A weight retention rate of 75% by weight or more is preferred because it further increases the heat resistance of the linking agent and improves the block copolymerization reaction rate.

$$\text{Weight retention rate (\% by weight)} = \text{(weight (g) of linking agent after measurement)/(weight (g) of linking agent before measurement)} \times 100$$

When the PPS is reacted in a molten state, it can be reacted at 280°C to 300°C, and when the PPS is reacted in the form of a solution, it can be reacted at 200°C to 250°C. Thus, if the heat resistance of the linking agent is low, the linking agent may undergo sublimation, evaporation, or pyrolysis during the reaction at a high temperature, which results in an increased proportion of linking agent that makes no contribution to the reaction, leading to a reduced block copolymerization reaction rate. A linking agent having heat resistance can improve the block copolymerization reaction rate.

Here, for example, although the PPS-thermoplastic resin block copolymer can be produced under catalyst-free conditions, the reaction can also be carried out in the presence of a catalyst. Adding a catalyst causes a direct reaction between the PPS and the thermoplastic resin to improve the block copolymerization reaction rate. Examples of the catalyst that can be used in the production method of the present invention include catalysts used in producing polyester. Specific examples include compounds such as manganese, cobalt, zinc, titanium, and calcium, which are used as a catalyst of the esterification reaction in producing polyester; compounds such as magnesium, manganese, calcium, cobalt, zinc, lithium, and titanium, which are used in transesterification reaction; and compounds such as antimony, titanium, aluminum, tin, and germanium, which are used in polymerization reaction.

Not only the PPS component and the thermoplastic resin component may be linked via a linking agent, end structures derived from repeating units of the components may be directly linked with each other. Furthermore, the block copolymer may contain a plurality of PPS units or a plurality of thermoplastic resin units in one molecule. In other words, the block copolymer may be not only a diblock copolymer or a triblock copolymer but also a tetrablock or other multiblock copolymer.

Although the mixing ratio of the PPS (A) to the thermoplastic resin (B) to the bifunctional linking agent (C) may be set as appropriate, the amount of PPS is preferably 10% to 90% by weight, more preferably 20% to 80% by weight, based on the total weight of the PPS, the thermoplastic resin, and the linking agent. When the amount of PPS is in this preferred range, the block copolymerization reaction rate tends to be high, and morphology tends to be uniform. The amount of thermoplastic resin is preferably 10% to 95% by weight, more preferably 20% to 90% by weight, based on the total weight. When the amount of thermoplastic resin is in this preferred range, the thermoplastic resin is less likely to be a dispersed component (island component) when the PPS and the thermoplastic resin are block copolymerized, and the thermoplastic resin component can be easily removed to give a porous body.

The amount of linking agent is preferably 0.1% to 20% by weight, more preferably 1% to 10% by weight, based on the total weight. The amount of linking agent is preferably determined as appropriate according to, for example, the number average molecular weights of the PPS and the thermoplastic resin and the number of functional groups in the molecular chains of the PPS and the thermoplastic resin.

The linking agent may be added in any order. The linking agent may be mixed simultaneously with the PPS and the thermoplastic resin and reacted; alternatively, after the PPS and the linking agent, or the thermoplastic resin and the linking agent are mixed and reacted in advance, the thermoplastic resin or the PPS can be further mixed and reacted. Furthermore, the linking agent may be added after the PPS and the thermoplastic resin have been mixed in advance.

The temperature at which the mixture containing the PPS, the thermoplastic resin, and the linking agent is heated and reacted, although varying depending on the molecular weight of the PPS, the type and the molecular weight of the thermoplastic resin, the type and the molecular weight of the linking agent, and other factors, is preferably higher than or equal to a temperature at which the PPS and the thermoplastic resin melt, specifically, preferably 290°C or higher, more preferably 295°C or higher. The upper limit of the reaction temperature is, for example, 400°C or lower, preferably 380°C or lower, more preferably 350°C or lower, and still more preferably 320°C or lower. Reaction temperatures in such a preferred range prevent or reduce pyrolysis of the PPS and the thermoplastic resin and sublimation, evaporation, and pyrolysis of the linking agent during the reaction. The temperature at which the PPS and the thermoplastic resin melt can be determined by differential scanning calorimetry (DSC).

Furthermore, for the polymerization atmosphere in the method for producing the PPS-thermoplastic resin block copolymer of the present invention, for example, a reaction in an inert atmosphere such as nitrogen, helium, or argon, or a reaction under reduced pressure or under high pressure can be appropriately employed.

During the block copolymerization reaction, the reaction system may contain an organic polar solvent. As used herein, the term "organic polar solvent" refers to a solvent that can dissolve at least a part of the PPS, the thermoplastic resin, and the linking agent at a reaction temperature, and examples include 1-chloronaphthalene, *N*-methyl-2-pyrrolidone, *N*-ethyl-2-pyrrolidone, *N*-methyl-ε-caprolactam, diethylene glycol, benzophenone, and diphenyl ether. The reaction temperature in the case where an organic polar solvent is used may be any temperature at which the PPS and the thermoplastic resin melt, preferably 180°C or higher, more preferably 200°C or higher. Although there is no upper limit

to the reaction temperature, it is preferably 260°C or lower, more preferably 250°C or lower. At a reaction temperature of not higher than this preferred upper limit, there is no possibility of decomposition of the linking agent, and such a reaction temperature is never to be higher than the boiling point of the solvent. If the reaction must be carried out at a temperature over the boiling point, the reaction can also be carried out using a high-pressure vessel such as an autoclave.

To the PPS-thermoplastic resin block copolymer, various other additives may be further added to the extent that the object of the present invention is not adversely affected. Examples of other additives include fibrous inorganic fillers, non-fibrous inorganic fillers, fibrous organic fillers, sizing agents, silane coupling agents, abrasion resistance agents, mold release agents, preventing discoloring agents, plasticizers, antioxidants, ultraviolet light absorbents, heat stabilizers, lubricants, mold release agents, antistatic agents, antiblocking agents, colorants including dyes and pigments, flame-retardants, auxiliary flame retardants, foaming agents, and antimicrobial agents. Fibrous fillers are preferred because they can improve the mechanical strength of the PPS porous body.

The PPS-thermoplastic resin block copolymer may be in various forms, such as resin moldings, films, sheets, fibers, and powders. When in the form of fibers or films, the PPS-thermoplastic resin block copolymer can be drawn.

The PPS porous body may be produced by any method that can chemically decompose and remove the thermoplastic resin component from the PPS-thermoplastic resin block copolymer, and any method can be used, such as hydrolysis, pyrolysis, or oxidation decomposition. Of these, removal by hydrolysis is suitable for use.

When a polyester, a polycarbonate, or a polyamide is used as the thermoplastic resin (B), removal by hydrolysis using an acidic aqueous solution or an alkaline aqueous solution is preferred because swelling of a matrix component due to solvent can be prevented, and the time required for removal of the thermoplastic resin component can be shortened. When a polyester or a polycarbonate is used, it is more preferable to use an alkaline aqueous solution because the polyester or the polycarbonate can be hydrolyzed with high efficiency and removed in a short time. When a polyamide is used, it is preferable to use an acidic aqueous solution.

The alkaline aqueous solution may be of any type. It is preferable to use an alkali metal hydroxide or an alkaline earth metal hydroxide, and in terms of the balance of cost, availability, and hydrolysis rate, it is preferable to use sodium hydroxide or potassium hydroxide.

The concentration of the alkaline aqueous solution is preferably in the range of 0.10 to 10M. A concentration of the alkaline aqueous solution in this preferred range can reduce the time required for removal by decomposition and also prevents an excessive increase in the viscosity of the aqueous solution, so that the efficiency of removal by decomposition cannot be reduced.

To increase the hydrolysis rate of the thermoplastic resin component, the temperature of the alkaline aqueous solution is preferably 60 to 120°C. To improve the removal efficiency, treatment under pressure and stirring of the aqueous solution are also preferred.

After the thermoplastic resin component has been removed, it is preferable to remove the remaining treating liquid with an appropriate solvent. When an acidic or alkaline aqueous solution is used for the treatment, for example, the solution, after the treatment, is preferably washed away with ion exchange water and then dried.

Through the treatment as described above, the thermoplastic resin component in the block copolymer is decomposed and removed to form pores, while the PPS component is not decomposed to form branches of porous areas and non-porous areas, whereby the PPS porous body of the present invention can be produced.

(3) Method for Producing PPS (A)

Examples of the method for producing the PPS (A) described above include a method (A1) for producing the PPS (A), in which a cyclic polyphenylene sulfide (a) is heated in the presence of a sulfide compound having reactive functional groups, and a method (A2) for producing the PPS (A), in which a mixture containing at least a sulfidizing agent, a dihalogenated aromatic compound, an organic polar solvent, and a monohalogenated compound having a reactive functional group is heated. These methods for producing the PPS (A) will be described below in detail.

(3-1) Method (A1) for Producing PPS (A)

A first preferred method for producing the PPS (A) is a method in which a cyclic polyphenylene sulfide (a) is heated in the presence of a sulfide compound having reactive functional groups.

In the method (A1) for producing the PPS (A), the amount of sulfide compound is preferably 0.01 to 25 mol%, more preferably 0.01 to 15 mol%, still more preferably 0.01 to 10 mol%, and particularly preferably 0.01 to 5 mol%, per mole of phenylene sulfide structural units of the cyclic polyphenylene sulfide (a). A sulfide compound in an amount in this preferred range results in a PPS with reactive functional groups sufficiently introduced and also avoids disadvantages such as reduction in molecular weight of the resulting PPS and increase in material cost.

The heating temperature in producing the PPS (A) by the production method (A1) is preferably a temperature at which a reaction mixture of the cyclic polyphenylene sulfide (a) and the sulfide compound having reactive functional

groups melts, and under such temperature conditions, it does not take an excessively long time to produce the PPS (A). The temperature at which the cyclic polyphenylene sulfide (a) melts, although varying depending on the composition and molecular weight of the cyclic polyphenylene sulfide (a) and the environment during heating, can be estimated, for example, by analyzing the cyclic polyphenylene sulfide (a) by differential scanning calorimetry. The lower limit of the heating temperature is, for example, 180°C or higher, preferably 200°C or higher, more preferably 220°C or higher, and still more preferably 240°C or higher. When the lower limit of the heating temperature is in this preferred temperature range, the cyclic polyphenylene sulfide (a) melts, and the PPS (A) can be produced in a short time. In addition, undesirable side reactions cannot occur, such as decomposition reactions and cross-linking reactions, for example, between cyclic polyphenylene sulfides, between PPSs produced by heating, and between PPS and cyclic polyphenylene sulfide, and the properties of the resulting PPS (A) cannot be reduced. The upper limit of the heating temperature is, for example, 400°C or lower, preferably 360°C or lower, and more preferably 340°C or lower. When the upper limit of the heating temperature is not higher than this temperature, adverse effects of the undesirable side reactions on the properties of the resulting PPS (A) tend to be reduced.

The reaction time, although varying depending on the various properties, such as the content, the number of cycles (i), and the molecular weight, of cyclic compounds in the cyclic polyphenylene sulfide (a) used, the type of sulfide compound used, and the conditions such as heating temperature, is preferably set so as to prevent the above undesirable side reactions. The heating time is, for example, 0.01 to 100 hours, preferably 0.05 to 20 hours, and more preferably 0.05 to 10 hours.

The heating of the cyclic polyphenylene sulfide (a) in the presence of a sulfide compound having reactive functional groups can also be carried out under substantially solvent-free conditions. Under such conditions, the temperature can be raised in a short time, and the reaction proceeds fast, as a result of which the PPS (A) tends to be produced in a short time. As used herein, the term "substantially solvent-free conditions" means that the amount of solvent is 10% by weight or less, more preferably 3% by weight or less, based on the amount of cyclic polyphenylene sulfide (a).

The polymerization reaction of the PPS (A) may, as a matter of course, be carried out using a commonly used polymerization reactor and may further be carried out using any apparatus equipped with a heating mechanism, such as molds for producing molded articles, kneaders, and melt extruders, and known systems such as a batch-type method and a continuous method can be employed.

The reaction is preferably carried out in a non-oxidizing atmosphere, and reduced pressure conditions are also preferred. When the reaction is carried out under reduced pressure conditions, it is preferable to bring the atmosphere in the reaction system once under a non-oxidizing atmosphere before establishing reduced pressure conditions. This operation prevents or reduces the occurrence of undesirable side reactions such as decomposition reactions and cross-linking reactions, for example, between cyclic polyphenylene sulfides, between PPSs produced by heating, and between PPS and cyclic polyphenylene sulfide. The term "non-oxidizing atmosphere" refers to an atmosphere in which the gas phase with which cyclic polyphenylene sulfide comes into contact has an oxygen concentration of 5% by volume or less, preferably 2% by volume or less, and more preferably is substantially free of oxygen, i.e., an inert gas atmosphere such as nitrogen, helium, or argon. Of these, the nitrogen atmosphere is particularly preferred in terms of economic efficiency and ease of handling. When the reaction is carried out under reduced pressure conditions, the pressure is preferably 50 kPa or lower, more preferably 20 kPa or lower, and still more preferably 10 kPa or lower, in order to prevent undesirable side reactions such as cross-linking reactions. The lower limit of the reduced pressure conditions is, for example, 0.1 kPa or more, more preferably 0.2 kPa or more, in order to prevent vaporization of low-molecular-weight cyclic compounds in the cyclic polyphenylene sulfide.

The reaction can also be carried out under pressurized conditions. When the reaction is carried out under pressurized conditions, it is preferable to bring the atmosphere in the reaction system once under a non-oxidizing atmosphere before establishing pressurized pressure conditions. The term "under pressurized conditions" means that the pressure in the reaction system is higher than atmospheric pressure. The upper limit is preferably, but not necessarily, not higher than 0.2 MPa in terms of ease of handling of reactors.

This production method (A1) enables a high-rate introduction of end reactive functional groups into the PPS and an increase in molecular weight, thus improving the yield of the block copolymerization reaction and increasing the molecular weight of the block copolymer.

(3-2) Method (A2) for Producing PPS (A)

A second preferred method for producing the PPS (A) is a method (A2), in which a mixture containing at least a sulfidizing agent, a dihalogenated aromatic compound, an organic polar solvent, and a monohalogenated compound having a reactive functional group is heated.

To inhibit decomposition and efficiently produce a polyphenylene sulfide having a viscosity suitable for processing, the amount of dihalogenated aromatic compound in the production method (A2) is in the range of 0.8 mole to less

than 1.5 moles, preferably 0.9 mole to less than 1.1 moles, and more preferably 0.95 mole to less than 1.05 moles, per mole of sulfidizing agent. When the amount of dihalogenated aromatic compound is in this preferred range, decomposition of the dihalogenated aromatic compound can be inhibited, and the decrease in molecular weight of the PPS (A) can be prevented to ensure that sufficient mechanical properties are expressed.

In the production method (A2), the amount of organic polar solvent used as a polymerization solvent for PPS is not limited to any particular amount, but in terms of stable reactivity and economic efficiency, it is selected from the range of 2.5 moles to less than 5.5 moles, preferably 2.5 moles to less than 5.0 moles, and more preferably 2.5 moles to less than 4.5 moles, per mole of sulfidizing agent.

Furthermore, in the production method (A2), in which a monohalogenated compound having a reactive functional group is added in producing PPS, the amount of monohalogenated compound is preferably in the range of 0.01 to 10 mol%, more preferably in the range of 0.1 to 8 mol%, and still more preferably in the range of 1 to 5 mol%, per mole of dihalogenated aromatic compound. When the amount of monohalogenated compound is in this preferred range, there is no tendency to low introduction of reactive ends into the resulting PPS (A), while the decrease in molecular weight of the PPS is prevented to ensure that mechanical properties are expressed.

In addition, the total amount of halogenated compounds including the dihalogenated aromatic compound and the monohalogenated compound is preferably in a specific range. The total amount of halogenated compounds is preferably 0.98 mole to less than 1.10 moles, more preferably 1.00 mole to less than 1.08 moles, and still more preferably 1.03 moles to less than 1.07 moles, per mole of sulfidizing agent. When the total amount of halogenated compounds per mole of sulfidizing agent is in this preferred range, decomposition of the halogenated compounds can be inhibited, and the decrease in molecular weight of the PPS (A) can be prevented to ensure that sufficient mechanical properties are expressed.

When the PPS (A) is produced by a method according to the production method (A2), the monohalogenated compound may be added at any timing, for example, during the dehydration step described below, at the start of polymerization, or during polymerization. Also, the monohalogenated compound may be added in several times. The monohalogenated compound is preferably added when the conversion of the dihalogenated aromatic compound is less than 80%, more preferably less than 70%. From this viewpoint, it is most preferable to add the monohalogenated compound from the end of the dehydration step to the start of polymerization or at the start of polymerization, that is, together with the dihalogenated aromatic compound. When the monohalogenated compound is added at this preferred timing, there is no need for polymerization using a reflux device for preventing the monohalogenated compound from vaporizing during the dehydration step and for a pressure filling device for addition during the polymerization (in a pressurized state), and, furthermore, it is ensured that the monohalogenated compound is completely consumed and does not remain in the polymerization system at the end of the polymerization.

In the production method (A2), the sulfidizing agent can be used in the form of a hydrate or an aqueous mixture. In this case, before adding a dihalogenated aromatic compound and a monohalogenated compound, it is preferable to perform the dehydration step where the mixture of an organic polar solvent and the sulfidizing agent is heated to remove an excess amount of water from the system. The dehydration is preferably, but not necessarily, carried out in such a manner that an alkali metal hydrosulfide and an alkali metal hydroxide are added to the organic polar solvent in an inert gas atmosphere at a temperature ranging from normal temperature to 150°C, preferably from normal temperature to 100°C, and the temperature is raised under normal or reduced pressure to at least 150°C, preferably 180 to 260°C, to evaporate water. The amount of water in the system at the end of the dehydration step is preferably 0.9 to 1.1 moles per mole of the sulfidizing agent loaded. The amount of water in the system herein refers to a value calculated by subtracting the amount of water removed from the system from the amount of water loaded in the dehydration step.

In the production method (A2), a polymerization step is performed where the reaction product prepared in the dehydration step is brought into contact with a dihalogenated aromatic compound and a monohalogenated compound in an organic polar solvent and allowed to polymerize. At the start of the polymerization step, a sulfidizing agent and a polyhalogenated aromatic compound are added to the organic polar solvent preferably in an inert gas atmosphere at a temperature range of 100°C to 220°C, preferably 130°C to 200°C. These materials may be loaded in random order or at the same time.

The polymerization reaction is preferably performed at a temperature ranging from 200°C to lower than 280°C. Although there is no particular strict restrictions on the reaction conditions, examples of the method include a method in which the temperature is raised at a constant rate, and then the reaction is continued at 245°C to lower than 280°C for a given time; a method in which the reaction is carried out for a given time at a constant temperature of from 200°C to lower than 245°C, and then the reaction is continued for a given time at an increased temperature of 245°C to lower than 280°C; and a method in which the reaction is carried out for a given time at a constant temperature of from 200°C to lower than 245°C, particularly, 230°C to lower than 245°C, and then the temperature is raised to 245°C to lower than 280°C to complete the reaction in a short time.

The polymerization reaction is carried out desirably in a non-oxidizing atmosphere, preferably in an inert gas atmosphere such as nitrogen, helium, or argon, and particularly preferably in a nitrogen atmosphere in terms of economic

efficiency and ease of handling. The reaction pressure in the polymerization reaction is not limited to any particular value because it varies depending on the type and amount of material and solvent used, the polymerization reaction temperature, and other conditions.

In the method for producing the block copolymer of the present invention, the PPS (A) can be recovered from a polymerized reactant obtained by the above method and used for the block copolymerization reaction. The polymerized reactant contains PPS and an organic polar solvent and may also contain unreacted materials, water, byproduct salts, and other components. From such a reaction mixture, the PPS can be recovered by any method, for example, a method in which some or most of the organic polar solvent is removed as required by distillation or any other operation, and then the mixture is brought into contact, optionally under heating, with a solvent that poorly dissolves the PPS component, is miscible with the organic polar solvent, and dissolves byproduct salts to recover the PPS (A) as a solid. Solvents having such properties typically have relatively high polarities, and the most suitable solvent cannot be determined because it varies depending on the type of the organic polar solvent used and the byproduct salt. Examples include water; alcohols such as methanol, ethanol, propanol, isopropanol, butanol, and hexanol; ketones such as acetone and methyl ethyl ketone; and acetates such as ethyl acetate and butyl acetate. In terms of availability and economic efficiency, water, methanol, and acetone are preferred, and water is particularly preferred.

Treatment with such a solvent can reduce the amount of organic polar solvent and byproduct salt in the PPS (A). This treatment precipitates the PPS (A) as a solid, which can be recovered using a known solid-liquid separation method. Solid-liquid separation can be carried out, for example, by separation by filtration, centrifugation, and decantation. This series of treatments may optionally be repeated several times. The repeated treatment tends to further reduce the amount of organic polar solvent and byproduct salt in the PPS (A).

The treatment with a solvent can also be carried out by mixing the polymerized reactant with a solvent, and the mixture may optionally be stirred or heated as appropriate. The treatment with a solvent is carried out preferably, but not necessarily, at 20°C to 220°C, more preferably 50°C to 200°C. A temperature within this range is preferred because, for example, it facilitates the removal of byproduct salts and also enables treatment under relatively low pressure. When water is used as a solvent, the water is preferably distilled water or deionized water. Alternatively, aqueous solutions may optionally be used that contain organic acid compounds, such as formic acid, acetic acid, propionic acid, butyric acid, chloroacetic acid, dichloroacetic acid, acrylic acid, crotonic acid, benzoic acid, salicylic acid, oxalic acid, malonic acid, succinic acid, phthalic acid, and fumaric acid, and alkali metal salts and alkaline earth metal salts thereof; inorganic acid compounds, such as sulfuric acid, phosphoric acid, hydrochloric acid, carbonic acid, and silicic acid; ammonium ions; and other compounds. The PPS (A) that has been treated, when containing the solvent used for the treatment, may optionally be dried to remove the solvent.

(3-3) Cyclic Polyphenylene Sulfide (a)

The cyclic polyphenylene sulfide contained in the cyclic polyphenylene sulfide (a) for use in the method (A1) for producing the PPS (A) is a cyclic compound composed mainly, preferably 80 mol% or more, of repeating structural units -(Ph-S)-, where Ph is a phenylene group, as represented by general formula (II) below. The cyclic polyphenylene sulfide (a) contains the cyclic polyphenylene sulfide of general formula (II) in an amount of at least 50% by weight or more, preferably 70% by weight or more, more preferably 80% by weight or more, and still more preferably 90% by weight or more.

[Chemical Formula 2]

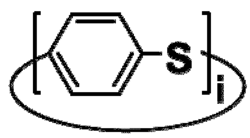

(II)

Although there is no upper limit to the weight fraction of the cyclic polyphenylene sulfide in the cyclic polyphenylene sulfide (a), it is, for example, 98% by weight or less, preferably 95% by weight or less. In general, as the weight fraction of cyclic polyphenylene sulfide in the cyclic polyphenylene sulfide (a) increases, the molecular weight of the PPS that has been heated tends to increase. However, the melting temperature tends to be high when the weight fraction of cyclic polyphenylene sulfide in the cyclic polyphenylene sulfide (a) is over the above upper limit.

The number of cycles i in general formula (II) is preferably, but not necessarily, from 4 to 50, more preferably from 4 to 25, and still more preferably from 4 to 15. As described below, conversion of cyclic polyphenylene sulfide into PPS by heating is preferably carried out at or above the temperature at which the cyclic polyphenylene sulfide melts, and when the number of cycles i is in the above preferred range, the melting temperature of the cyclic polyphenylene sulfide is not too high, and conversion of the cyclic polyphenylene sulfide into PPS can be carried out at a lower temperature.

Furthermore, the cyclic polyphenylene sulfide may be either a single compound having a single number of cycles or a mixture of cyclic compounds having different numbers of cycles. However, a mixture of cyclic compounds having different numbers of cycles tends to have a lower melting temperature than a single compound having a single number of cycles, and using a mixture of cyclic compounds having different numbers of cycles is preferred because the temperature during the conversion into PPS can be lower.

The component other than cyclic polyphenylene sulfide in the cyclic polyphenylene sulfide (a) is preferably a PPS oligomer. As used herein, the term "PPS oligomer" refers to a linear homooligomer or cooligomer composed mainly, preferably 80 mol% or more, of repeating structural units -(Ph-S)-. The molecular weight of the PPS oligomer may be, for example, lower than that of PPS. Specifically, a number average molecular weight of less than 5,000 is preferred.

(3-4) Sulfide Compound

The sulfide compound for use in the method (A1) for producing the PPS (A) is a sulfide compound having reactive functional groups, represented by general formula (III) below.

[Chemical Formula 3]

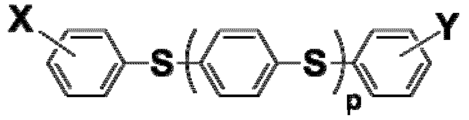

(III)

In formula (III), at least one of X and Y is a reactive functional group selected from an amino group, a carboxyl group, a hydroxyl group, a mercapto group, an isocyanato group, a silanol group, an acid anhydride group, an epoxy group, and derivatives thereof, preferably a reactive functional group selected from an amino group, a carboxyl group, and a hydroxyl group. When only one of X and Y has a reactive functional group, the other may be any functional group, for example, hydrogen or halogen. The number of cycles p in the sulfide compound is an integer of 0 to 20. p is preferably an integer of 0 to 15, more preferably 0 to 10. When the number of cycles p is in this preferred range, compatibility with cyclic polyphenylene sulfide and low-viscosity properties cannot be reduced. In the method (A1) for producing the PPS (A), a mixture of sulfide compounds having different numbers of cycles p can also be used.

Specific examples of such sulfide compounds include bis(2-aminophenyl) sulfide, bis(3-aminophenyl) sulfide, bis(4-aminophenyl) sulfide, bis(2-carboxyphenyl) sulfide, bis(3-carboxyphenyl) sulfide, bis(4-carboxyphenyl) sulfide, bis(2-hydroxyphenyl) sulfide, bis(3-hydroxyphenyl) sulfide, bis(4-hydroxyphenyl) sulfide, bis(4-hydroxy-3-methylphenyl) sulfide, 5,5'-thiodisalicylic acid, 2,2',4,4'-tetrahydroxydiphenyl sulfide, and oligomers thereof. Of these, bis(4-aminophenyl) sulfide, bis(4-carboxyphenyl) sulfide, bis(4-hydroxyphenyl) sulfide, and oligomers thereof are more suitable for use in terms of reactivity and crystallinity. These sulfide compounds may be used alone or as a mixture or a combination of two or more.

(3-5) Sulfidizing Agent

The sulfidizing agent for use in the method (A2) for producing the PPS (A) may be any agent capable of introducing sulfide bonds into a dihalogenated aromatic compound, and examples include alkali metal sulfides, alkali metal hydrosulfides, and hydrogen sulfide.

Specific examples of alkali metal sulfides include lithium sulfide, sodium sulfide, potassium sulfide, rubidium sulfide, cesium sulfide, and mixtures of two or more thereof. Of these, lithium sulfide and/or sodium sulfide are preferred, and sodium sulfide is more preferred. Any of these alkali metal sulfides can be used in the form of a hydrate, an aqueous mixture, or an anhydride. The term "aqueous mixture" refers to an aqueous solution, a mixture of an aqueous solution and a solid component, or a mixture of water and a solid component. Commonly available, inexpensive alkali metal sulfides are hydrates or aqueous mixtures, and thus, alkali metal sulfides in such a form are suitable for use.

Specific examples of alkali metal hydrosulfides include lithium hydrosulfide, sodium hydrosulfide, potassium hydrosulfide, rubidium hydrosulfide, cesium hydrosulfide, and mixtures of two or more thereof. Of these, lithium hydrosulfide and/or sodium hydrosulfide are preferred, and sodium hydrosulfide is more preferred.

Alkali metal sulfides produced in the reaction system of an alkali metal hydrosulfide and an alkali metal hydroxide can also be used. In addition, alkali metal sulfides produced by contacting an alkali metal hydrosulfide with an alkali metal hydroxide in advance can also be used. Any of these alkali metal hydrosulfides and alkali metal hydroxides can be used in the form of a hydrate, an aqueous mixture, or an anhydride, and is preferably used in the form of a hydrate or an aqueous mixture in terms of availability and cost.

Furthermore, alkali metal sulfides produced in the reaction system of an alkali metal hydroxide, such as lithium hydroxide or sodium hydroxide, and hydrogen sulfide can also be used. In addition, alkali metal sulfides produced by contacting an alkali metal hydroxide, such as lithium hydroxide or sodium hydroxide, with hydrogen sulfide in advance can also be used. Hydrogen sulfide may be used in the gaseous state, liquid state, or aqueous solution state.

Alkali metal hydroxides and/or alkaline earth metal hydroxides can be used in combination with the sulfidizing agent. Specific examples of suitable alkali metal hydroxides include sodium hydroxide, potassium hydroxide, lithium hydroxide, rubidium hydroxide, cesium hydroxide, and mixtures of two or more thereof. Specific examples of alkaline earth metal hydroxides include calcium hydroxide, strontium hydroxide, and barium hydroxide. Of these, sodium hydroxide is suitable for use.

When an alkali metal hydrosulfide is used as the sulfidizing agent, it is particularly preferable to simultaneously use an alkali metal hydroxide, the amount of which is in the range of, for example, 0.95 mole to 1.50 moles, preferably 1.00 mole to 1.25 moles, and more preferably 1.005 moles to 1.200 moles, per mole of alkali metal hydrosulfide. When hydrogen sulfide is used as the sulfidizing agent, it is particularly preferable to simultaneously use an alkali metal hydroxide. The amount of alkali metal hydroxide in this case is in the range of, for example, 2.0 to 3.0 moles, preferably 2.01 to 2.50 moles, and more preferably 2.04 to 2.40 moles, per mole of hydrogen sulfide.

(3-6) Dihalogenated Aromatic Compound

Examples of the dihalogenated aromatic compound for use in the method (A2) for producing the PPS (A) include dihalogenated benzenes such as *p*-dichlorobenzene, *o*-dichlorobenzene, *m*-dichlorobenzene, *p*-dibromobenzene, *o*-dibromobenzene, *m*-dibromobenzene, 1-bromo-4-chlorobenzene, and 1-bromo-3-chlorobenzene; and dihalogenated aromatic compounds containing substituents other than halogens, such as 1-methoxy-2,5-dichlorobenzene, 1-methyl-2,5-dichlorobenzene, 1,4-dimethyl-2,5-dichlorobenzene, 1,3-dimethyl-2,5-dichlorobenzene, and 3,5-dichlorobenzoic acid. In particular, halogenated aromatic compounds composed mainly of *p*-dihalogenated benzenes such as *p*-dichlorobenzene are preferred. Particularly preferred are those containing *p*-dichlorobenzene in an amount of 80 to 100 mol%, more preferably 90 to 100 mol%. Two or more different dihalogenated aromatic compounds may be used in combination.

(3-7) Organic Polar Solvent

Examples of preferred organic polar solvents for use in the method (A2) for producing the PPS (A) include organic amide solvents. Specific examples include aprotic organic solvents including *N*-alkyl pyrrolidones such as N-methyl-2-pyrrolidone, *N*-ethyl-2-pyrrolidone, and *N*-cyclohexyl-2-pyrrolidone, caprolactams such as *N*-methyl-ε-caprolactam, 1,3-dimethyl-2-imidazolidinone, *N,N*-dimethylacetamide, *N,N*-dimethylformamide, hexamethylphosphoric triamide, and mixtures thereof. These are suitable for use for their high reaction stabilities. Of these, *N*-methyl-2-pyrrolidone and 1,3-dimethyl-2-imidazolidinone are preferred, and *N*-methyl-2-pyrrolidone is more preferred.

(3-8) Monohalogenated Compound

The monohalogenated compound for use in the method (A2) for producing the PPS (A) may be any monohalogenated compound having a reactive functional group W, represented by general formula (IV) below. Preferred are those having, as a reactive functional group W, a reactive functional group selected from an amino group, a carboxyl group, a hydroxyl group, an acid anhydride group, an isocyanate group, an epoxy group, a silanol group, an alkoxysilane group, and derivatives thereof, and more preferred are those having an amino group, a carboxyl group, or a hydroxyl group as a functional group.

[Chemical Formula 4]

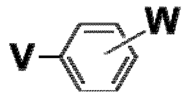 (IV)

(In general formula (IV), V represents a halogen.)

Specific examples of such monohalogenated compounds include monohalogenated compounds such as 2-chlorobenzoic acid, 3-chlorobenzoic acid, 4-chlorobenzoic acid, 2-amino-4-chlorobenzoic acid, 4-chloro-3-nitrobenzoic acid, 4'-chlorobenzophenone-2-carboxylic acid, 2-chloroaniline, 3-chloroaniline, 4-chloroaniline, 2-chlorophenol, 3-chlorophenol, and 4-chlorophenol. Of these, 4-chlorobenzoic acid, 4-chloroaniline, and 4-chlorophenol are more preferred

in terms of polymerization reactivity, versatility, and other properties. These monohalogenated compounds may be used alone or in a combination of two or more.

(4) Epoxy Resin

A detailed description will be given of preferred aspects of an epoxy resin in the case where a bifunctional epoxy resin is used as a bifunctional linking agent. In general, the term "epoxy resin" is used in two senses: a prepolymer before being cured, and a cured product obtained by reacting a mixed composition of a prepolymer, a curing agent, and other components; but the epoxy resin in the present invention refers to a prepolymer before being cured having epoxy groups in its molecule.

Epoxy resins are capable of reacting with various nucleophiles to form chemical bonds, and examples of nucleophiles include amines, carboxylic acids, alcohols, aromatic alcohols, thiols, isocyanates, silanols, and acid anhydrides. Upon reaction of an epoxy resin with such a nucleophile, an epoxy group is cleaved to form a secondary alcohol.

Although the number average molecular weight of the epoxy resin is not limited, it is preferably 300 or more, more preferably 500 or more, and still more preferably 700 or more because the epoxy resin requires heat resistance. The upper limit of the number average molecular weight is preferably 3,000 or less, more preferably 2,000 or less. When the upper limit of the number average molecular weight is in this preferred range, it is not possible that the miscibility with PPS and polyester decreases to increase the proportion of epoxy resin that makes no contribution to the block copolymerization reaction. The values of the number average molecular weight of the epoxy resin are determined by GPC analysis in terms of polystyrene.

The epoxy resin of the present invention preferably contains a halogen atom in its molecule. Since halogen atoms have larger atomic weights than a carbon atom, a nitrogen atom, and an oxygen atom, the epoxy resin has a higher molecular weight, which makes it possible to prevent or reduce sublimation and evaporation in producing a block copolymer. In addition, in comparison with an epoxy resin having the same molecular weight, the epoxy resin containing a halogen atom has a shorter molecular chain and thus has higher reactivity with reactive functional groups of PPS and thermoplastic resin, leading to an increased block copolymerization reaction rate. Furthermore, the flame resistance of the PPS-thermoplastic resin block copolymer can be improved by utilizing self-extinguishing properties of halogen atoms. The number of halogen atoms in one molecule of the epoxy resin is not limited, and epoxy resins containing one or more halogen atoms in their molecules can be used.

The range of the epoxy equivalent of the epoxy resin of the present invention can be appropriately set according to the end equivalents of the PPS and polyester to be reacted. The epoxy equivalent refers to a mass of a resin containing epoxy groups in an amount of 1 equivalent and is expressed in g/ep. The epoxy equivalent is preferably at least 200 g/ep because an epoxy resin having an excessively low epoxy equivalent has low heat resistance. The upper limit of the epoxy equivalent is preferably 3,000 g/ep or less. When the upper limit of the epoxy equivalent is in this preferred range, the viscosity of the resin cannot be too high to reduce the miscibility with PPS and polyester.

The epoxy resin for use in the present invention may be any epoxy resin that has heat resistance and is bifunctional, and examples include glycidyl ether epoxy resins, glycidyl ester epoxy resins, and olefin oxidation (alicyclic) epoxy resins. Examples of glycidyl ether epoxy resins include bisphenol A epoxy resins, bisphenol F epoxy resins, bisphenol S epoxy resins, hydrogenated bisphenol A epoxy resins, hydrogenated bisphenol F epoxy resins, biphenyl epoxy resins, naphthalene epoxy resins, epoxy resins obtained by reacting aliphatic dihydric alcohol or aromatic dihydric alcohol with epichlorohydrin or β-methyl epichlorohydrin, prepolymers obtained by polymerization of these resins, and various isomers, alkyl-substituted products, and halogen-substituted products thereof. Examples of glycidyl ester epoxy resins include epoxy resins obtained by reacting dicarboxylic acid such as phthalic acid, hexahydrophthalic acid, or dimer acid with epichlorohydrin or β-methyl epichlorohydrin, prepolymers obtained by polymerization of these resins, and various isomers, alkyl-substituted products, and halogen-substituted products thereof. Examples of olefin oxidation epoxy resins include epoxidized polyolefins such as conjugated or unconjugated straight-chain dienes and conjugated or unconjugated cyclic dienes, prepolymers obtained by polymerization of these resins, and various isomers, alkyl-substituted products, and halogen-substituted products thereof. Other examples include epoxy-containing olefin copolymers obtained by copolymerizing α-olefins and α,β-unsaturated carboxylic acid glycidyl esters.

Specific examples of epoxy resins suitable for use include chlorinated bisphenol A diglycidyl ethers, brominated bisphenol A diglycidyl ethers, chlorinated bisphenol F diglycidyl ethers, brominated bisphenol F diglycidyl ethers, bisphenol A diglycidyl ether prepolymers, chlorinated bisphenol A diglycidyl ether prepolymers, brominated bisphenol A diglycidyl ether prepolymers, chlorinated bisphenol F diglycidyl ether prepolymers, and brominated bisphenol F diglycidyl ether prepolymers.

In terms of heat resistance, brominated bisphenol A diglycidyl ethers, brominated bisphenol F diglycidyl ethers, bisphenol A diglycidyl ether prepolymers, and brominated bisphenol A diglycidyl ether prepolymers are more suitable for use. Brominated bisphenol A diglycidyl ethers and brominated bisphenol A diglycidyl ether prepolymers, which provides a block copolymer with improved flame resistance, are still more suitable for use. These epoxy resins may be

used alone or in a combination of two or more.

(5) Polyphenylene Sulfide-Thermoplastic Resin Block Copolymer

When a bifunctional epoxy resin is used as a bifunctional linking agent, a PPS-thermoplastic resin block copolymer (hereinafter also referred to as "epoxy-linked block copolymer" for short) having thermoplasticity in which PPS units represented by general formula (I) below and thermoplastic resin units are linked via a linking group containing a secondary alcohol is produced by the method for producing the PPS-thermoplastic resin block copolymer of the present invention. The thermoplasticity of a block copolymer means that when 30 mg of a copolymer is heated at 300°C for 30 seconds, the block copolymer melts to undergo flow deformation.

[Chemical Formula 5]

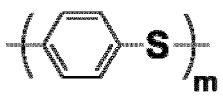

(I)

The linking group in the epoxy-linked block copolymer is characterized by containing a secondary alcohol. As used herein, the term "linking group" refers to a structure that links PPS units with thermoplastic resin units to form a block copolymer of PPS and a thermoplastic resin and can be represented by general formula (V) below.

[Chemical Formula 6]

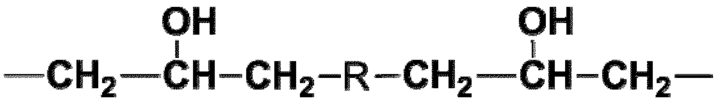

(V)

In general formula (V), the structure of R is not limited, and R is any group such as an alkylene group or an aryl group and may optionally be substituted. When R contains a halogen atom in its structure, a block copolymer with improved flame resistance is advantageously provided.

In the epoxy-linked block copolymer, the linking group is derived from an epoxy resin, and thus an epoxy group reacts with PPS or a thermoplastic resin to form a secondary alcohol. The secondary alcohol advantageously improves the hydrophilicity of the block copolymer and adhesion to additives. The presence of the secondary alcohol can be confirmed by analyzing the block copolymer using a method such as infrared (IR) spectroscopy or nuclear magnetic resonance (NMR) spectroscopy.

In the epoxy-linked block copolymer, the PPS units and the linking group are preferably linked via a structure selected from the group consisting of secondary amine, ester, ether, sulfide, amide, and siloxane. If the reactive functional group of the PPS (A) is an amino group, a carboxyl group, a hydroxyl group, a mercapto group, an isocyanato group, a silanol group, an acid anhydride group, or an epoxy group, the PPS units and the linking group will be linked via a structure selected from the above group.

The linkage of the PPS units and the linking group via a structure selected from the group consisting of secondary amine, ester, ether, sulfide, amide, and siloxane can be confirmed by analyzing the PPS-thermoplastic resin block copolymer using a method such as infrared (IR) spectroscopy, nuclear magnetic resonance (NMR) spectroscopy, mass spectrometry, or Energy dispersive X-ray (EDX) spectrometry.

Not only the PPS units and the thermoplastic resins unit may be linked via the linking group described above, end structures derived from the repeating units may be directly linked with each other. Furthermore, the block copolymer may contain a plurality of PPS units or a plurality of thermoplastic resin units in one molecule. In other words, the block copolymer may be not only a diblock copolymer or a triblock copolymer but also a tetrablock or other multiblock copolymer.

The number average molecular weight of the epoxy-linked block copolymer, although varying depending on the structure of the thermoplastic resin forming the block copolymer, is, for example, 10,000 or more, preferably 15,000 or more, and more preferably 20,000 or more. Its upper limit is, for example, 2,000,000 or less, preferably 1,000,000 or less, and more preferably 500,000 or less. Block copolymers having a number average molecular weight in this range have good physical properties. The block copolymer of the present invention may also have a monomodal molecular weight distribution. The values of number average molecular weight are determined by gel permeation chromatography (GPC) in terms of polystyrene.

## Examples

The present invention will be described below in detail. The examples below are not intended to limit the present invention.

### A. Measurement of Molecular Weight

For the molecular weight of PPS, a number average molecular weight (Mn) and a weight average molecular weight (Mw) in terms of polystyrene were determined by gel permeation chromatography (GPC), a type of size exclusion chromatography (SEC). The measurement conditions of GPC are given below.

Apparatus: SSC-7100 available from Senshu Scientific Co., Ltd.
Column: GPC 3506 available from Senshu Scientific Co., Ltd.
Eluent: 1-chloronaphthalene
Detector: differential refractive index detector
Column temperature: 210°C
Pre-thermostat bath temperature: 250°C
Pump thermostat bath temperature: 50°C
Detector temperature: 210°C
Flow rate: 1.0 mL/min
Sample injection volume: 300 μL (a slurry of about 0.2% by weight)

### B. Analysis of Extraction Rate of Polyester

Extraction of polyester was carried out as described below. A reaction product of a block copolymer in an amount of 1.00 g was melt pressed into a film with a thickness of 100 μm or less, and then the film was freeze-ground into powder. After that, 30 g of 1,1,1,3,3,3-hexafluoroisopropanol (HFIP) was added to the powder, and the resulting mixture was refluxed for 3 hours using an oil bath at 50°C to thereby elute unreacted polyester remaining in the block copolymer in HFIP. After heating under stirring for 3 hours, filtration was performed using a membrane filter with an average opening size of 0.45 μm to separate and recover HFIP-soluble components and insoluble components. The insoluble components were vacuum dried at 80°C overnight. The weight of the resulting dry solid was measured, and the extraction rate of polyester was calculated from the weights before and after the extraction using the following equation.

$$\text{Extraction rate of polyester (\% by weight)} = \text{weight (g) after blocking reaction/weight (g) before blocking reaction} \times 100$$

### C. Measurement of Alkali Weight Reduction Rate of Polyester

The alkali weight reduction rate after a PPS-polyester block copolymer has been hydrolyzed using an aqueous alkaline solution was calculated by the following equation.

$$\text{Alkali weight reduction rate (\% by weight)} = \{(\text{weight (g) before alkaline hydrolysis}) - (\text{weight (g) after alkaline hydrolysis})\}/(\text{weight (g) before alkaline hydrolysis}) \times 100$$

### D. Observation under Scanning Electron Microscope

Observation of the surface and the cross-section of a press film was carried out using a scanning electron microscope (S-5500 available from Hitachi High-Technologies Corporation). A sample sputtered with platinum palladium was observed.

E. Measurement of Thickness

The average of cross-sectional thicknesses at randomly selected ten points of a porous body observed under a scanning electron microscope was used as the thickness.

F. Measurement of Average Pore Size

Ten randomly selected cross-sections of a PPS porous body were obtained by a Cross-section Polisher method (CP method) and observed under a scanning electron microscope at a magnification of 100,000X, and diameters of pores in the observed images were measured. The average of the measurements was used as the average pore size.

G. Measurement of Porosity

A disc-shaped PPS porous body having a diameter of 20 mm and a thickness of 50 μm was prepared, and its porosity was calculated by the following equation.

$$\text{Porosity (\%)} = \{(\text{apparent volume - actual volume})/\text{apparent volume}\} \times 100$$

The apparent volume and the actual volume were calculated by the following equations.

$$\text{Apparent volume } (m^3) = \text{area } (m^2) \text{ of cut-out membrane} \times \text{thickness (m) of membrane}$$

$$\text{Actual volume } (m^3) = \text{weight (g) of porous body/specific gravity } (g \cdot m^{-3}) \text{ of material}$$

H. Measurement of Tensile Strength

The tensile strength was measured using a tensile tester (UTM-4L available from Toyo Baldwin). A strip sample 50 mm in length and 10 mm in width was cut out of a PPS porous body, and its tensile strength was measured at a tensile speed of 300 mm/min in an atmosphere at 25°C and a humidity of 65%.

I. Measurement of Water Permeation Flux

The measurement of water permeation flux was carried out in accordance with the testing method of filtration under reduced pressure of JIS K 3831 (1990) with a sheet-shaped PPS porous body (diameter: 40 mm, thickness: 50 μm) secured between stainless steel cells for filtration under reduced pressure. Ion exchange water in an amount of 500 mL was used as a testing liquid. The time when the whole amount of ion exchange water passes through the cells at a gauge pressure of - 10 kPa was obtained, and the flow rate of ion exchange water was calculated. The measurement was made three times using different PPS porous bodies prepared from the same level, and the average was used as the water permeation flux of the PPS porous body.

J. Analysis of Weight Retention Rate of Epoxy Resin

The analysis of the weight retention rate of an epoxy resin was carried out using a TG-DTA available from Seiko Instruments Inc. by raising the temperature to 300°C at 90°C/min and then holding at 300°C for 10 minutes. The weight after the measurement was measured, and the weight retention rate was calculated by the following equation.

$$\text{Weight retention rate (\% by weight)} = \text{weight (g) after measurement/weight (g) before measurement} \times 100$$

Reference Example 1 (Preparation of Cyclic Polyphenylene Sulfide)

In a stainless-steel autoclave equipped with an agitator were placed 14.03 g (0.120 mol) of a 48% by weight aqueous solution of sodium hydrosulfide, 12.50 g (0.144 mol) of a 48% by weight aqueous solution prepared using 96% sodium hydroxide, 615.0 g (6.20 mol) of N-methyl-2-pyrrolidone (NMP), and 18.08 g (0.123 mol) of *p*-dichlorobenzene (*p*-DCB). The reaction vessel was thoroughly purged with nitrogen and then sealed under nitrogen gas.

While stirring at a rotation speed of 400 rpm, the temperature was raised from room temperature to 200°C over about 1 hour. At this point, the pressure (the gauge pressure) in the reaction vessel was 0.35 MPa. The temperature was then raised from 200°C to 270°C over about 30 minutes. The pressure (the gauge pressure) in the reaction vessel at this point was 1.05 MPa. After the vessel was maintained at 270°C for 1 hour, the vessel was rapidly cooled to near room temperature, and then the contents were recovered.

The contents obtained were analyzed by gas chromatography and high-performance liquid chromatography to show that the consumption of the *p*-DCB monomer was 93%, and the production of cyclic polyphenylene sulfide was 18.5% assuming that all the sulfur components in the reaction mixture would convert into cyclic polyphenylene sulfide.

The contents in an amount of 500 g were then diluted with about 1,500 g of ion exchange water and then filtered through a glass filter with an average opening size of 10 to 16 μm. The residue on the filter was dispersed in about 300 g of ion exchange water, stirred at 70°C for 30 minutes, and again filtered in the same manner as above. This operation was repeated three times to yield a white solid. The solid was vacuum dried at 80°C overnight to yield a dry solid. The dry solid obtained was placed in an extraction thimble and subjected to Soxhlet extraction for about 5 hours using chloroform as a solvent to separate low-molecular-weight components in the solid.

After the extraction operation, the solid components remained in the extraction thimble was vacuum dried at 70°C overnight to yield about 6.98 g of an off-white solid. The solid was analyzed, and the absorption spectrum obtained by infrared spectroscopy indicated that the solid was a compound having a PPS structure with a weight average molecular weight of 6,300.

From the extract obtained by the extraction operation using chloroform, the solvent was removed, and then about 5 g of chloroform was added to prepare a slurry. The slurry was added dropwise with stirring to about 300 g of methanol. The resulting precipitate was recovered by filtration and vacuum dried at 70°C for 5 hours to yield 1.19 g of a white solid. This white powder was confirmed by the absorption spectrum obtained by infrared spectroscopy to be a compound composed of phenylene sulfide units. Furthermore, components divided into each component by high-performance liquid chromatography were analyzed by mass spectrum analysis (apparatus: M-1200H available from Hitachi High-Tech Science Corporation) and further MALDI-TOF-MS. The molecular weight information obtained showed that the white powder was a cyclic polyphenylene sulfide mixture composed mainly of *p*-phenylene sulfide units, containing a cyclic compound of 4 to 13 repeating units in an amount of about 98% by weight, and suitable for use in the production of the PPS (A) in the present invention. GPC showed that the cyclic polyphenylene sulfide mixture was all soluble in 1-chloronaphthalene at room temperature and had a weight average molecular weight of 900.

Reference Example 2 (Method of Producing Amino-Ended PPS)

A powder mixture of 20 g of the cyclic polyphenylene sulfide mixture obtained by the method described in Reference Example 1 and 0.80 g (2.0 mol%), per mole of PPS units, of bis(4-aminophenyl) sulfide was placed in a glass ampule, and the ampule was purged with nitrogen. The ampule was placed in an electric furnace conditioned at 320°C and heated for 120 minutes, after which the ampule was taken out and cooled to room temperature to yield a black solid. The product was all soluble in 1-chloronaphthalene at 250°C. HPLC showed that the conversion of the cyclic polyphenylene sulfide into PPS was 97.0%.

GPC showed a peak attributed to the cyclic polyphenylene sulfide and a peak of the PPS produced, from which the PPS obtained was found to have a number average molecular weight of 16,000, a weight average molecular weight of 26,000, and a polydispersity of 1.62. The amino group content per mole of PPS structural units was 0.6 mol%.

Reference Example 3 (Method of Producing Carboxyl-Ended PPS)

Reference Example 2 was repeated except that the reaction was carried out for 120 minutes using 0.5 mol% of bis(4-carboxyphenyl) sulfide to yield a black solid. The product was all soluble in 1-chloronaphthalene at 250°C. HPLC showed that the conversion of cyclic polyphenylene sulfide into PPS was 96.2%. GPC showed a peak attributed to the cyclic polyphenylene sulfide and a peak of the PPS produced, from which the PPS obtained was found to have a number average molecular weight of 17,000, a weight average molecular weight of 35,000, and a polydispersity of 2.06. The carboxyl group content per mole of PPS structural units was 0.37 mol%.

Reference Example 4 (Method of Producing Polyethylene Terephthalate)

Dimethyl terephthalate in an amount of 100 parts by weight, ethylene glycol in an amount of 60 parts by weight, and magnesium acetate in an amount of 0.05 mmol (in terms of magnesium atoms) based on 100 g of the polymer to be obtained were melted at 150°C in a nitrogen atmosphere. The resulting mixture was then heated to 240°C over 4 hours with stirring to distill out methanol, thereby promoting the interesterification reaction to produce bis(hydroxyethyl) terephthalate (BHT).

The BHT was introduced into a test tube and retained in the molten state at 250°C, and then antimony trioxide in an amount of 0.2 mmol (in terms of antimony atoms) based on 100 g of the polymer to be obtained and trimethyl phosphate in an amount of 0.1 mmol (in terms of phosphorus atoms) based on 100 g of the polymer to be obtained were added. The reaction was started 5 minutes after the compounds were introduced. The reactor was gradually heated from 250°C to 290°C over 60 minutes, while the pressure was reduced from normal pressure to 40 Pa over 60 minutes. At 290°C and 40 Pa, the polymerization reaction was carried out for 200 minutes. After completion of the polymerization reaction, the melt was discharged in strand form, cooled, and then immediately cut to give polyethylene terephthalate pellets. The intrinsic viscosity of the polyethylene terephthalate obtained was measured to be 0.69 dL/g.

Example 1

Into a test tube equipped with an agitator, a vacuum stirrer, and a nitrogen inlet tube were weighed 50 parts by weight of the amino-ended PPS obtained by the method described in Reference Example 2, 50 parts by weight of the polyethylene terephthalate obtained by the method described in Reference Example 4, and 7 parts by weight of brominated bisphenol A diglycidyl ether (Sigma-Aldrich Corporation, epoxy equivalent: 350 to 450, weight retention rate: 95.3% by weight), a bifunctional epoxy resin. The test tube was sealed and then purged with nitrogen. The test tube was then placed in an oil bath at 300°C, allowed to stand for five minutes to melt the resins, and then stirred. After 5 minutes from the start of the stirring, the stirring was stopped, and the test tube was quickly cooled to recover a product.

GPC showed that the chromatogram of the product was monomodal and the product had a number average molecular weight of 42,000 and a weight average molecular weight of 83,000, confirming that the molecular weight of the PPS used in the reaction was increased by block copolymerization. The PPS-polyethylene terephthalate block copolymer obtained was freeze-ground and extracted with 1,1,1,3,3,3-hexafluoroisopropanol (HFIP) to find that the amount of unreacted polyethylene terephthalate in the block copolymer was 30% by weight based on the amount of polyethylene terephthalate added.

The PPS-polyethylene terephthalate copolymer was then melt pressed to prepare a film (50 μm in thickness). The film was then immersed in a 7M aqueous sodium hydroxide solution at 80°C for 4 hours to remove polyethylene terephthalate by hydrolysis, washed with ion exchange water three times, and vacuum dried at 100°C for 3 hours to give a PPS porous body. The molecular weight of the PPS porous body was measured by GPC. The number average molecular weight was 16,000, and the weight average molecular weight was 26,000. There was no change in macroscopic form before and after the hydrolysis, and the rate of weight reduction of the block copolymer due to the hydrolysis was 46% by weight.

The surface and the cross-section of the PPS porous body were observed under a scanning electron microscope. A porous structure was observed on both the surface and the cross-section. Furthermore, the surface was observed at a magnification of 1,300X. Both porous areas and non-porous areas were observed, and the average area ratio of the porous areas relative to the observed field of view was 55%. The non-porous areas were communicated in the image observed. The PPS porous body had an average pore size of 0.25 μm and a porosity of 47%. The tensile strength and the water permeation flux of the PPS porous body are shown in Table 1. It was found that the tensile strength was high and the water permeation flux was high.

Example 2

A block copolymer was obtained in the same manner as in Example 1 except that the carboxyl-ended PPS obtained by the method described in Reference Example 3 was used. GPC showed that the chromatogram of the product was monomodal and the product had a number average molecular weight of 37,000 and a weight average molecular weight of 72,000. The block copolymer was extracted with HFIP to find that the amount of unreacted polyethylene terephthalate in the block copolymer was 38% by weight based on the amount of polyethylene terephthalate added. The block copolymer was then made porous by hydrolysis in the same manner as in Example 1. There was no change in macroscopic form before and after the treatment, and the rate of weight reduction of the block copolymer due to the hydrolysis was 38% by weight.

The surface of the PPS porous body was observed under a scanning electron microscope at a magnification of 1,300X. Both porous areas and non-porous areas were observed, and the average area ratio of the porous areas

relative to the observed field of view was 52%. The non-porous areas were communicated in the image observed. The PPS porous body had an average pore size of 0.22 μm and a porosity of 48%. The tensile strength and the water permeation flux of the PPS porous body are shown in Table 1.

Example 3

A block copolymer was obtained in the same manner as in Example 1 except that 35 parts by weight of amino-ended PPS, 65 parts by weight of polyethylene terephthalate, and 7 parts by weight of brominated bisphenol A diglycidyl ether were used. The block copolymer obtained was extracted with HFIP to find that the amount of unreacted polyethylene terephthalate in the block copolymer was 43% by weight based on the amount of polyethylene terephthalate added. The block copolymer was then made porous by hydrolysis in the same manner as in Example 1. There was no change in macroscopic form before and after the hydrolysis, and the rate of weight reduction of the block copolymer due to the hydrolysis was 48% by weight.

The surface of the PPS porous body was observed under a scanning electron microscope at a magnification of 1,300X. Both porous areas and non-porous areas were observed, and the average area ratio of the porous areas relative to the observed field of view was 58%. The non-porous areas were communicated in the image observed. The PPS porous body had an average pore size of 0.38 μm and a porosity of 62%. The tensile strength and the water permeation flux of the PPS porous body are shown in Table 1.

Example 4

A block copolymer was obtained in the same manner as in Example 1 except that 65 parts by weight of amino-ended PPS, 35 parts by weight of polyethylene terephthalate, and 7 parts by weight of brominated bisphenol A diglycidyl ether were used. The block copolymer obtained was extracted with HFIP to find that the amount of unreacted polyethylene terephthalate in the block copolymer was 26% by weight based on the amount of polyethylene terephthalate added. The block copolymer was then made porous by hydrolysis in the same manner as in Example 1. There was no change in macroscopic form before and after the hydrolysis, and the rate of weight reduction of the block copolymer due to the hydrolysis was 27% by weight.

The surface of the PPS porous body was observed under a scanning electron microscope at a magnification of 1,300X. Both porous areas and non-porous areas were observed, and the average area ratio of the porous areas relative to the observed field of view was 41%. The non-porous areas were communicated in the image observed. The PPS porous body had an average pore size of 0.20 μm and a porosity of 39%. The tensile strength and the water permeation flux of the PPS porous body are shown in Table 1.

Comparative Example 1

A commercially available PPS ("TORELINA® E2088"available from Toray Industries, Inc.) and the cyclic polyphenylene sulfide oligomer prepared in Reference Example 1 each in an amount of 50 parts by weight were mixed. The mixture was placed in a twin-screw melt kneading machine HK-25D (Parker Corporation) equipped with a T-die with its lip gap adjusted to be 0.2 mm, and melt film formation was carried out at 300°C. The drum temperature was set at 60°C, and the winding speed was controlled, whereby a PPS polymer/cyclic PPS oligomer mixture film with a thickness of 150 μm was prepared. The film was cut into a circle with a diameter of 5 cm and immersed in 100 ml of N-methyl-2-pyrrolidone at 100°C for 12 hours to dissolve and remove the cyclic PPS oligomer. The film was washed with 20 ml of N-methyl-2-pyrrolidone, washed with ion exchange water three times, and then vacuum dried at 100°C for 3 hours to give a PPS porous film. The surface of the PPS porous body was observed under a scanning electron microscope at a magnification of 1,300X. Uniform porous areas alone were observed, and there were substantially no non-porous areas. The PPS porous body had an average pore size of 0.002 μm and a porosity of 50%. The tensile strength and the water permeation flux of the PPS porous body are shown in Table 1. The water permeation flux was high, but the tensile strength was low.

Comparative Example 2

In an autoclave purged with nitrogen, 17 parts by weight of a commercially available PPS ("TORELINA® E2088" available from Toray Industries, Inc.), 10 parts by weight of diethylene glycol, and 73 parts by weight of N-methyl-2-pyrrolidone were placed and melted under pressurized conditions at 250°C. The resulting solution was discharged at 235°C through a slit die, passed through air for a distance of 22 mm, and then guided into a coagulation bath of 60% by weight of NMP to give a PPS film.

The surface of the PPS porous body was observed under a scanning electron microscope at a magnification

of 1,300X. No pores were observed on the surface. The PPS porous body had an average pore size of 6 μm and a porosity of 45%. The tensile strength and the water permeation flux of the PPS porous body are shown in Table 1. The tensile strength was high, but the permeation flux was low.

Comparative Example 3

A press film of a blend of PPS/polyethylene terephthalate was prepared in the same manner as in Example 1 except that no bifunctional epoxy resin was added, and subjected to alkaline hydrolysis. The rate of weight reduction due to the alkali treatment was 0% by weight, and there was no change in macroscopic form before and after the hydrolysis. This indicates that the PPS-polyethylene terephthalate block copolymer before the hydrolysis had a sea-island structure in which PPS was a sea component and polyethylene terephthalate was an island component, and polyethylene terephthalate was not decomposed and removed after the alkali treatment.

The surface of the press film after the alkali treatment was observed under a scanning electron microscope at a magnification of 1,300X. No pores were observed on the surface or the cross-section. The tensile strength and the water permeation flux of the PPS porous body are shown in Table 1.

[Table 1]

| | Average area of continuous porous region (%) | Average pore diameter (D) (μm) | Porosity (%) | Tensile strength (Mpa) | Water permeation coefficient (mL · $cm^{-2}$ · $min^{-1}$) |
|---|---|---|---|---|---|
| Example 1 | 55 | 0.25 | 47 | 63 | 180 |
| Example 2 | 52 | 0.22 | 48 | 58 | 121 |
| Example 3 | 58 | 0.38 | 62 | 54 | 274 |
| Example 4 | 41 | 0.20 | 39 | 66 | 105 |
| Comparative Example 1 | 100 | 0.002 | 50 | 48 | 325 |
| Comparative Example 2 | 0 | 6.00 | 45 | 68 | 0 |
| Comparative Example 3 | 0 | - | - | 35 | 0 |

Industrial Applicability

The polyphenylene sulfide porous body of the present invention is a functional material having high heat resistance, chemical resistance, mechanical characteristics, and permeation performance and can be used in various fields. For example, the polyphenylene sulfide porous body of the present invention can be widely used in applications such as separation membranes, battery separators, bag filters, lightweight structural materials, dialysis membranes, catalyst supports, thermal insulation materials, heat insulating materials, shock absorbers, adsorbent materials, and low dielectric constant materials. Moreover, the polyphenylene sulfide porous body of the present invention can be combined with other materials to simultaneously achieve various properties.

Description of Symbols

1: Porous area
2: Non-porous area

**Claims**

1. A polyphenylene sulfide porous body comprising, on its surface:

porous areas having porous structures; and

non-porous areas having substantially no porous structures.

2. The polyphenylene sulfide porous body according to claim 1, wherein the porous areas on the surface has an average area ratio of 10% to 80%.

3. The polyphenylene sulfide porous body according to claim 1 or 2, wherein the non-porous areas are communicated on the surface.

4. The polyphenylene sulfide porous body according to any one of claims 1 to 3, wherein the polyphenylene sulfide porous body has a porosity of 10% to 80%.

5. The polyphenylene sulfide porous body according to any one of claims 1 to 4, comprising a polyphenylene sulfide having a number average molecular weight (Mn) of 6,000 to 100,000.

6. A method for producing a polyphenylene sulfide-thermoplastic resin block copolymer, comprising
reacting a polyphenylene sulfide (A) having a reactive functional group at least at an end, a thermoplastic resin (B), and a bifunctional linking agent (C).

7. The method for producing a polyphenylene sulfide-thermoplastic resin block copolymer according to claim 6, wherein the reactive functional group of the polyphenylene sulfide (A) is a group selected from the group consisting of an amino group, a carboxyl group, a hydroxyl group, a mercapto group, an isocyanato group, a silanol group, an acid anhydride group, an epoxy group, and derivatives thereof.

8. The method for producing a polyphenylene sulfide-thermoplastic resin block copolymer according to claim 6 or 7, wherein the bifunctional linking agent (C) is an epoxy resin.

9. The method for producing a polyphenylene sulfide-thermoplastic resin block copolymer according to any one of claims 6 to 8, wherein the bifunctional linking agent (C) comprises a halogen atom.

10. The method for producing a polyphenylene sulfide-thermoplastic resin block copolymer according to claim 8 or 9, wherein the epoxy resin has a number average molecular weight of 300 or more.

11. The method for producing a polyphenylene sulfide-thermoplastic resin block copolymer according to any one of claims 8 to 10, wherein the epoxy resin has an epoxy equivalent of at least 200 g/ep.

12. A polyphenylene sulfide-thermoplastic resin block copolymer comprising polyphenylene sulfide units and thermoplastic resin units linked via a linking group comprising a secondary alcohol.

13. The polyphenylene sulfide-thermoplastic resin block copolymer according to claim 12, wherein the polyphenylene sulfide units and the linking group are linked via a structure selected from the group consisting of secondary amine, ester, ether, sulfide, amide, and siloxane.

14. The polyphenylene sulfide-thermoplastic resin block copolymer according to claim 12 or 13, wherein the linking group comprises a halogen atom.

15. The polyphenylene sulfide-thermoplastic resin block copolymer according to any one of claims 12 to 14, wherein the polyphenylene sulfide units have a number average molecular weight (Mn) in a range of 6,000 to 100,000.

16. The polyphenylene sulfide-thermoplastic resin block copolymer according to any one of claims 12 to 15, wherein the polyphenylene sulfide-thermoplastic resin block copolymer has a number average molecular weight (Mn) in a range of 10,000 to 2,000,000.

17. A method for producing a polyphenylene sulfide porous body, comprising
decomposing and removing a thermoplastic resin component from the polyphenylene sulfide-thermoplastic resin block copolymer according to any one of claims 12 to 16 or a polyphenylene sulfide-thermoplastic resin block copolymer obtained by the method according to any one of claims 6 to 11.

[Figure 1]

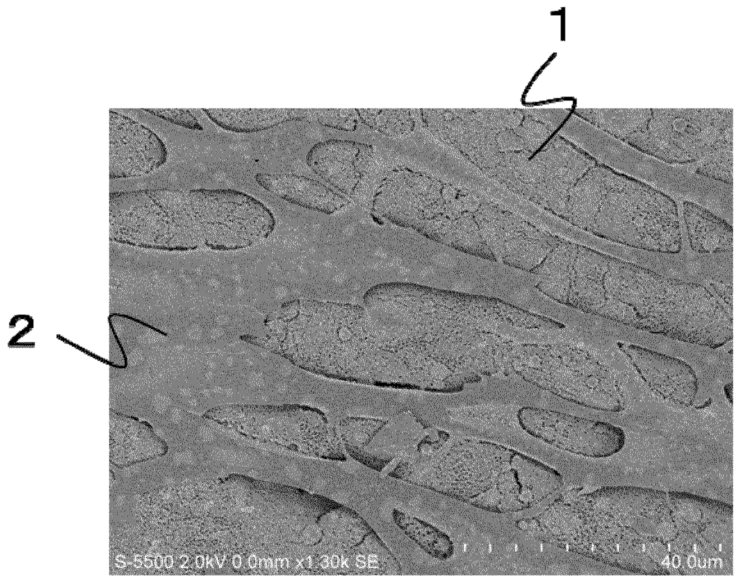

**INTERNATIONAL SEARCH REPORT**

International application No. PCT/JP2015/057173

A. CLASSIFICATION OF SUBJECT MATTER
*C08G75/02*(2006.01)i, *C08G59/40*(2006.01)i, *C08G81/00*(2006.01)i, *C08J9/26*(2006.01)i

According to International Patent Classification (IPC) or to both national classification and IPC

B. FIELDS SEARCHED

Minimum documentation searched (classification system followed by classification symbols)
C08G75/02, C08G59/40, C08G81/00, C08J9/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2006-241364 A (NTN Corp.), 14 September 2006 (14.09.2006), claims 1 to 6; paragraph [0013] (Family: none) | 1-17 |
| A | JP 2014-038771 A (DIC Corp.), 27 February 2014 (27.02.2014), paragraphs [0078] to [0089] (Family: none) | 1-17 |
| A | JP 05-039370 A (Dainippon Ink and Chemicals, Inc.), 19 February 1993 (19.02.1993), paragraph [0038] (Family: none) | 1-17 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 May 2015 (26.05.15) | 02 June 2015 (02.06.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010254943 A
- JP 2012233018 A
- JP 60248202 A
- JP 2014189747 A
- JP 58067733 A
- JP 59059917 A
- JP 4311725 A

### Non-patent literature cited in the description

- *Expected materials for the future,* vol. 10 (7), 18